# EUROPEAN PATENT SPECIFICATION

(11) **EP 1 743 530 B1**
(45) Date of publication and mention of the grant of the patent: **31.08.2011**
(21) Application number: 05076633.6
(22) Date of filing: 15.07.2005
(51) Int. Cl.: A23L 1/304

(54) **Iron fortified food product and additive**
Eisen verstärktes Lebensmittel und Zusatzstoff
Aliments renforcés en fer et additifs alimentaires

(43) Date of publication of application: 17.01.2007
(73) Proprietor: Unilever N.V., 3013 AL Rotterdam (NL); Unilever PLC, London EC4Y 0DY (GB)
(72) Inventor: Clive Edward, Marshman Unilever R & D Vlaardingen, 3133 AT Vlaardingen (NL); Krassimir Petkov Velikov Unilever R&D Vlaardingen, 3133 AT Vlaardingen (NL)
(74) Representative: Kan, Jacob Hendrik

(56) References cited:
- EP-A- 1 166 653
- WO-A-03/032741
- US-B1- 6 254 905

## Description

### FIELD OF THE INVENTION

The invention generally relates to the field of fortified food products. More in particular, it relates to the fortification of a food product with iron. The invention also relates to an additive for the fortification and supplementation of food and other products with iron and to a method of preparing the same.

### BACKGROUND TO THE INVENTION

Iron is an essential trace element in animal and human nutrition. It is a component of heme in hemoglobin and of myoglobin, cytochromes and several enzymes. The main role of iron is its participation in the transport, storage and utilization of oxygen.

Iron deficiency was and remains a common nutritional problem not only in the developing world but also in the industrialized countries. Inadequate intake of dietary iron causes the high incidence of anemia which nutritional surveys have identified among children, adolescents and women. Since the human body does not produce minerals, it is totally dependent on an external supply of iron, either nutritional or supplementary. The importance of adequate iron intake is recognized during the whole life of the human being. The recommended daily allowance for iron intake is from 10 to 18 mg per day, and is dependent on age and sex. Children, women up to the time of menopause, and expectant and nursing mothers are in the group with higher requirements of iron.

In general, water-soluble inorganic minerals are likely to impair the stability of the food product, and it is hard to contain more than a certain amount, and they cannot be used abundantly as mineral supplements. Besides, the peculiar bitter or metallic taste is also a problem for many food formats.

In general, water-insoluble minerals affect the stability and taste of the product less and high amounts can be added. However, the high specific gravity of minerals (generally as high as 1.5 or higher) causes them to sediment in a short time when dispersed in a liquid product such as milk, so that the stability and the appearance of food is adversely affected. Thus, the amount that can be added is still limited.

Furthermore, the use of mineral supplements in form of insoluble large particles can cause abrasion and severe damage of the mixing and processing equipment.

Iron in the form of a water-soluble salt or complex can be added to food and/or beverages to provide the daily allowance. The main problems caused by iron sources added to food and beverages are color and off-flavor production, especially in the presence of oxygen, light and at high temperature. Moreover, the addition of iron to beverages, especially to tea, chocolate milk or banana containing drinks, can be very difficult. If highly or slightly soluble sources of iron are used, interaction between the iron and iron sensitive ingredients, such as polyphenols, occurs. Thus, the addition of ferrous sulfate or other soluble iron salts such as ferric sulfate, ferrous lactate, ferrous gluconate, ferrous fumarate, ferric citrate, ferric choline citrate, ferric ammonium citrate, etc., cause chocolate powders, tea and other beverages to drastically change color when reconstituted with water or milk.

Another problem in iron fortification is the capacity of iron to promote destructive free-radical reactions, which can result in off- flavors. Thus, the addition of soluble iron sources to fat containing products - mostly products with a high level of unsaturated fatty acids - cause flavor changes due to lipid oxidation. Iron promoted oxidation not only affects the organoleptic properties of foods and beverages, but also undesirably affects the nutritional quality of these products. These interactions can be also enhanced during heat treatment, such as pasteurization or sterilization.

Finally, from a technical point of view, soluble iron salts can also cause corrosion of processing equipment.

As alternatives to the soluble sources of iron, which are highly bioavailable but lead to an undesirable flavor and/or color, insoluble iron sources such as elemental iron, ferric pyrophosphate, etc. may be used. These forms of iron cause little or no discoloration and off-flavor problems but are poorly bioavailable. In addition, added to drinks and liquid beverages they may cause sedimentation, which could make the mineral not available to the consumer because it remains in the package, or lost of transparency, if added to clear products.

Also, the efficiency of the uptake of iron from food fortified with large particles of water-insoluble iron salts or elemental iron, the bioavailability and bioacessability, remain a problem due to slow dissolution of the mineral. Finally, from a technical point of view, the use of insoluble large particles of insoluble iron salts can cause abrasion and severe damage of the mixing and processing equipment.

So far, few attempts have been made to simultaneously address these very complex issues.

US 6,254,905 discloses a food additive which may contain ferric pyrophosphate. EP 1 166 653 A2 discloses protein compositions containing iron used as food additive.

WO 03/032741 A1 discloses tea fortified with a ferrous-plant protein hydrolysate complex, wherein an iron salt is water-soluble.

For example, EP-B-870 435 (Taiyo Kagaku) discloses a mineral-containing composition having improved dispersion stability and comprising enzymatically decomposed lecithin and water-insoluble mineral, preferably Fe(III) or ferric pyrophosphate. The use of enzymatically decomposed lecithin is essential for achieving the desired dispersion stability. A major drawback of these compositions is that the emulsifier lecithin has to be present. It is known that lecithin has not very pleasant taste. In addition, the use of emulsifier makes the product particularly costly and not appealing to the consumer.

Products containing lecithin are "Generally Recognised As Safe" (GRAS) under 21 CFR 184.1400 and specifications of the Food Chemicals Codex. Lecithin products that have been modified sometimes require special labelling. For example, when enzymatically modified, the phrase "Enzymatically Modified Lecithin" should appear on labelling. Finally, lecithin is known to vary significantly in quality from batch to batch causing extra difficulties in food processing.

In many cases the unnecessary use of emulsifiers is not desirable. Therefore, it is desirable to develop a nutritional additive that fulfils the above-mentioned requirements for stability without the necessity of using enzymatically-decomposed lecithin.

It is therefore an object of the present invention to provide an iron fortified food product and iron-containing additive, which overcomes one or more of the above mentioned drawbacks. Surprisingly, it has now been found that this object can be achieved by the food product according to the invention, having and iron content of at least 5 ppm (R. F. Hurrell, Preventing Iron Deficiency Through Food, Fortification, Nutrition Reviews, Vol. 55, No. 6), comprising iron-containing nanoparticles stabilised with biopolymers.

### SUMMARY OF THE INVENTION

According to a first aspect, the invention provides a food product which has been fortified in iron, having iron content of at least 5 ppm, comprising iron-containing nanoparticles, wherein the nanoparticles comprise a low-soluble iron salt having a Ks of 10⁻⁷ or less, wherein the iron salt is selected from the group of iron phosphates, wherein the nanoparticles have a particle size of 5 to 1000 nanometer, and wherein the nanoparticles are stabilised by means of a biopolymer selected from the group of polyamides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols, and nucleic acids.

According to a second aspect, there is provided an iron containing additive for use in the food and other products according to the invention, in the form of an iron-containing nanoparticles having a diameter of 5 - 1000 nanometer, wherein the nanoparticles comprise a low-soluble iron salt having a Ks of 10⁻⁷ or less, wherein the iron salt is selected from the group of iron phosphates, and wherein the nanoparticles are stabilised by means of a biopolymer selected from the group consisting of polyamides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols and nucleic acids.

According to a third aspect, there is provided a process for preparing the iron-containing additive of the invention and according to a fourth aspect, there is provided a process for making the food product of the invention.

### DETAILED DESCRIPTION OF THE INVENTION

The invention regards an iron-fortified food product having an iron content of at least 5 ppm iron (Fe). The food product comprises iron in the form of iron-containing biopolymer-stabilised nanoparticles. Nanoparticles are defined for the purpose of this invention as particles stabilised by the presence of protective biopolymer. They have a particle size of about 5 to 1000 nanometer. The compositions of the invention contain biopolymer-stabilised iron containing nanoparticles, which have an effective average particle size of less than about 1000 nm. In a preferred embodiment of the invention, the biopolymer stabilised iron containing nanoparticles have an effective average particle size of less than about 900 nm, preferably less than about 800 nm, less than about 700 nm, less than about 600 nm, less than about 500 nm, less than about 400 nm, less than about 300 nm, less than about 250 nm, less than about 200 nm, less than about 150 nm, less than about 100 nm, less than about 75 nm, or even less than about 50 nm.

The effective average particle size can be measured using techniques that are well known in the art, such as electron microscopy or light scattering techniques. The nanoparticles may be crystalline, polycrystalline or amorphous.

The iron containing nanoparticles used in the present invention are stabilised by means of a biopolymer selected from the group of polyamides (e.g. proteins and poly(amino acids)), organic polyoxoesters synthesized by bacteria and eukaryotic organisms (e.g. poly(hydroxyalkanoic acids), poly(malic acid), polylactides, polyglycolide, polyanhydrides, polyesteramides and cutin), polythioesters, polyphosphate, polyisoprenoids (e.g. natural rubber or Gutta Percha), polyphenols (e.g. lignin or humic acids), and nucleic acids such as ribonucleic acids and deoxyribonucleic acids. The most preferred biopolymers are polyamides (protein and poly(amino acids))

The polyamide (protein) source may be any specific type of protein, e.g. animal (collagens and gelatines), in particular dairy protein, or plant protein. The plan protein sources are for example soy, pea, amaranth, canola (rape), carob, corn, oat, potato, sesame, rice, wheat, lupin protein, or mixtures thereof. These proteins can be intact or partially hydrolysed, and can be used separately or in combination with each other. The preferred protein source is whey protein or soy protein.

Incidentally, the biopolymer can be used together with other nonionic or negatively charged surfactants. It is desired that the surfactant is usually used so as to be contained in the mineral additive of the present invention in the range of from 0 to 20% by weight.

The amount of the biopolymer to be used may be generally about 0.01 to 10 wt.%, preferably 0.1 to 5 wt.%, and preferably around 1% wt. with respect to the total amount of non-dried product containing nanoparticles, but these ranges do not restrict the scope of the invention because they may vary depending on differences in the type of biopolymer and concentration of nanoparticles. The weight ratio of biopolymer to iron-containing nanoparticles is generally at least about 1:10,000 or higher (e.g. more biopolymer in comparison to nanoparticle mass).

The advantages of using the biopolymer-stabilised iron-containing nanoparticles according to the present invention are the excellent chemical stability in respect to interaction with other elements, oxidation, complexion activity, and colour change due to the low concentration of free iron ions these than soluble iron salts. Very importantly, due to the presence of stabilising biopolymer, these particles are compatible with many products containing other biopolymers.

Furthermore, due to their low chemical activity, these iron containing nanoparticles allow multiple fortification with vitamins, other minerals such as Ca, Zn, Mn, Mg, Cu, Se and other micro-nutrients.

Due to their very small particle size, sedimentation is very slow or completely negligible in comparison to large particles, which provides excellent physical stability of liquid and semi-liquid products.

In addition, the nanoparticles have excellent dispersibility in aqueous phases, including emulsions and gels, and in products comprising the same.

Due to their small particle size, the mineral compositions have a good bioavailability and bioacessability in comparison to large particles of the same compound.

Due to their small size and low solubility, these substances don not cause adverse organoleptic effects, such bad (metallic) taste, chalkiness and sandiness.

Furthermore, due to their small size, these substances do not have significant abrasion effect on the equipment.

The iron-fortified food products of the present invention can be advantageously in the form of beverages, (dry) soups, fat spreads, (yoghurt or protein) drinks, dressings or cereal products like bread.

A second aspect of the invention is an iron-containing additive for use in the food or other products as iron supplement according to the invention, in the form of iron containing nanoparticles of iron insoluble inorganic phosphate salt, and having a particle size of 5 to 1000 nanometer, wherein the nanoparticles are stabilised by means of a biopolymer.

The iron-containing additive comprises a low-soluble salt having a Ks of 10⁻⁷ or less. By low soluble we mean a Ks, where Ks is the solubility product, of 10⁻⁷ or less.

The forms of the water-insoluble minerals generally include inorganic salts, organic salts, and the like.

Examples of organic low-soluble salts are iron - partially hydrolysed proteins, iron phytate or other sufficiently low soluble organic salts of iron. Each of those inorganic salts can be used alone or in admixture of two or more salts.

The low-soluble iron salt is selected from the group of iron phosphates, more preferably pyrophosphate and iron orthophosphate or mixtures thereof.

The iron containing food product is prepared by mixing the iron-containing additive as dispersed in liquid or dried form using a suitable mixing process known in the art.

The amount of iron in the food product is at least 5 ppm iron (Fe), but preferably it is at least 10, 20, 50 or even 100 ppm.

According to another embodiment, the iron-containing additive is prepared by chemical homogeneous or inhomogeneous precipitation in the presence of the biopolymer or a mixture of biopolymers. The precipitation can be achieved by fast mixing, using any suitable fast mixing process, of two solutions or (liquid-in-liquid, liquid-in-gas, gas-in-liquid, or solid-in-liquid or mixtures) dispersions containing iron ions and counter ions that form insoluble iron salt, respectively. The biopolymer can be present in either or in both phases. The pH of the final product can be from 2 to 8, preferably between 6 and 7. Preferably, the biopolymer is present in the system containing ions that do not interact strongly with the biopolymer.

The resulting iron-containing biopolymer-stabilised nanoparticles can be separated from the mother liquid and dried e.g. using spray or freeze drying. Or the can be concentrated or directly dried together with the side products. Preferably, the side products should be Na, K or ammonium salts.

The resulting iron-containing biopolymer-stabilised nanoparticles can be crystalline, polycrystalline or amorphous. In the preferred embodiment, the biopolymer-stabilised nanoparticles are amorphous or polycrystalline.

Finally, the additive according to the invention, comprising iron-containing nanoparticles could be further utilized in a wide variety of fields such as cosmetics, animal feed additives, plant fertilizers, pharmaceutical products, personal and home care products.

The animal feeds containing the iron-containing nanoparticles of the present invention include, for example, feeds for pets, domestic animals, cultured fishes, and the like.

Cosmetics containing the iron-containing nanoparticles of the present invention include lotion; milky lotion; bathing agents; detergents such as cleansing agents; dentifrices, skin creams and the like.

Industrial products containing the iron-containing nanoparticles of the present invention include iron-based catalysts, agricultural purposes, for slugs and snails control, sheet materials for walls or floors, additive to polymers and resins.

The invention will mow be further illustrated by means of the following, non-limiting examples.

### Example 1

### Whey protein stabilized iron(II) pyrophosphate nanoparticles

A solution containing 0.01M pyrophosphate and 1% wt. whey protein isolate was prepared by dissolving sodium pyrophosphate decahydrate and whey protein isolate (trade name: BiPro 95, manufactured by Danisco Food International) in demineralized water. An iron (II) solution containing 0.02M Fe was prepared by dissolution of ferrous chloride tetrahydrate in demineralized water.

The iron (II) solution was then quickly added the pyrophosphate-whey protein solution prepared above with vigorous stirring. The pH of the resulting mixture was not further adjusted. The reaction self-terminated after several minutes after the formation of iron (II) pyrophosphate nanoparticles - a greenish suspension that does not sediment for several hours was formed. The resulting reaction mixture was subjected to solid-liquid separation by centrifugation, to concentration, or to drying. The electron microscopy analyses revealed particle sizes of less than 1000 nm.

The resulting reaction mixture was subjected to solid-liquid separation by centrifugation, to concentration, or to drying.

To prepare Product I, the whey protein-stabilized ferrous pyrophosphate nanoparticles formed in the solid phase were collected and re-suspended in ion-exchanged water to give concentrated ferrous pyrophosphate slurry.

To prepare Product II, the entire reaction mixture was dried.

### Example 2

### Whey protein stabilized iron(III) pyrophosphate nanoparticles

A solution containing 0.015M pyrophosphate and 1% wt whey protein isolate was prepared by dissolving sodium pyrophosphate decahydrate and whey protein isolate (trade name: BiPro 95, manufactured by Danisco Food International) in demineralized water. An iron (III) solution containing 0.02M Fe was prepared by dissolution of ferric chloride hexahydrate in demineralized water.

The iron (III) solution was then quickly added the pyrophsophate-whey protein solution prepared above with vigorous stirring. The pH of the resulting mixture was not further adjusted. The reaction self-terminated after several minutes after the formation white suspension of iron (III) pyrophosphate nanoparticles that does not sediment for several hours was formed. The electron microscopy analyses revealed particle sizes of less than 1,000 nm.

The resulting reaction mixture was subjected to solid-liquid separation by centrifugation, to concentration, or to drying.

To prepare Product III, the whey protein-stabilized ferrous pyrophosphate nanoparticles formed in the solid phase were collected and then re-suspended in ion-exchanged water to give a concentrated ferric pyrophosphate slurry.

To prepare Product IV, the entire reaction mixture was dried.

### Comparative Example 1

### Gum Arabic stabilized iron(II) pyrophosphate nanoparticles

A solution containing 0.075M pyrophosphate and 0.5% wt gum Arabic was prepared by dissolving sodium pyrophosphate decahydrate and Gum Arabic (manufactured by Sigma -Aldrich) in demineralized water. An iron (II) solution containing 0.015M Fe was prepared by dissolution of ferrous sulfate heptahydrate in demineralized water.

The iron (II) solution was then quickly added the pyrophosphate-Gum Arabic solution prepared above with vigorous stirring. The pH of the resulting mixture was not further adjusted. The reaction self-terminated after several minutes after the formation of a greenish suspension of iron (II) pyrophosphate nanoparticles that does not sediment for several hours. The electron microscopy analyses revealed particle sizes of less than 1,000 nm.

The resulting reaction mixture was subjected to solid-liquid separation by centrifugation, to concentration, or to drying. To prepare Product V, the Gum Arabic-stabilized ferrous pyrophosphate nanoparticles formed in the solid phase were collected and the resulting complex was then re-suspended in ion-exchanged water to give a concentrated ferrous pyrophosphate slurry.

To prepare Product VI, the entire reaction mixture was dried.

### Comparative Example 2

### Gum Arabic stabilized iron(III) pyrophosphate nanoparticles

A solution containing 0.075M pyrophosphate and 0.5% wt gum Arabic was prepared by dissolving sodium pyrophosphate decahydrate and Gum Arabic (manufactured by Sigma -Aldrich) in demineralized water. An iron (III) solution containing 0.01M Fe was prepared by dissolution of ferric chloride hexahydrate in demineralized water.

The iron (III) solution was then quickly added the pyrophosphate-Gum Arabic solution prepared above with vigorous stirring. The pH of the resulting mixture was not further adjusted. The reaction self-terminated after several minutes after the formation of white suspension of iron (III) pyrophosphate nanoparticles that does not sediment for several hours was formed. The electron microscopy analyses revealed particle sizes of less than 1,000 nm.

The resulting reaction mixture was subjected to solid-liquid separation by centrifugation, to concentration, or to drying.

To prepare Product VII, the Gum Arabic-stabilized ferrous pyrophosphate nanoparticles formed in the solid phase were collected, and the resulting complex was then re-suspended in ion-exchanged water to give a concentrated ferrous pyrophosphate slurry.

To prepare Product VII, the entire reaction mixture was dried.

### Comparative example 3

A solution containing 0.01M pyrophosphate was prepared by dissolving sodium pyrophosphate decahydrate in demineralized water. An iron (II) solution containing 0.02M Fe was prepared by dissolution of ferrous chloride tetrahydrate in demineralized water.

The iron (II) solution was then quickly added the pyrophosphate solution prepared above with vigorous stirring. The pH of the resulting mixture was not further adjusted. The reaction self-terminated after several minutes after the formation of greenish iron (II) pyrophosphate precipitate, which immediately sediments. The electron microscopy observation revealed the formation of large irregular aggregates.

The resulting reaction mixture was subjected to solid-liquid separation by centrifugation, to concentration, or to drying.

To prepare Reference Product A, the ferrous pyrophosphate precipitate formed in the solid phase was collected and re-suspended in ion-exchanged water, to give a concentrated pyrophosphate slurry.

### Comparative example 4

A solution containing 0.015M pyrophosphate was prepared by dissolving sodium pyrophosphate decahydrate in demineralized water. An iron (III) solution containing 0.02M Fe was prepared by dissolution of ferric chloride hexahydrate in demineralized water.

The iron (III) solution was then quickly added the pyrophosphate solution prepared above with vigorous stirring. The pH of the resulting mixture was not further adjusted. The reaction self-terminated after several minutes after the formation of white-yellow iron (III) pyrophosphate precipitate, which immediately sediments. The electron microscopy observation revealed the formation of large irregular aggregates.

The resulting reaction mixture was subjected to solid-liquid separation by centrifugation, to concentration, or to drying.

To prepare Reference Product B, the ferric pyrophosphate precipitate formed in the solid phase was collected and re-suspended in ion-exchanged water, to give concentrated ferric pyrophosphate slurry.

## Claims

1. Food product which has been fortified in iron content, having an iron content of at least 5 ppm, comprising iron containing nanoparticles,
wherein the nanoparticles comprise a low-soluble iron salt having a Ks of 10⁻⁷ or less, wherein the iron salt is selected from the group of iron phosphates,
wherein the nanoparticles have a particle size of 5 to 1000 nanometer, and
wherein the nanoparticles are stabilised by means of a biopolymer selected from the group of polyamides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols, and nucleic acids.

2. Food product according to claim 1, wherein the iron salt is selected from pyrophosphate, iron orthophosphate or mixtures thereof.

3. Food product according to any one of the preceding claims, in the form of fat spread, a (protein) drink, an instant protein drink, a beverage or a dressing.

4. Iron-containing additive for use in the food or other products according to any one of the preceding claims, in the form of iron containing nanoparticles having a particle size of 5 to 1,000 nanometer,
wherein the nanoparticles comprise a low-soluble iron salt having a Ks of 10⁻⁷ or less, wherein the iron salt is selected from the group of iron phosphates, and
wherein the nanoparticles are stabilised by means of a biopolymer selected from the group consisting of polyamides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols and nucleic acids.

5. Iron-containing additive according to claim 4, wherein the iron salt is selected from pyrophosphate, iron orthophosphate or mixtures thereof.

6. Process for preparing the food product according to any one of claims 1 to 3, comprising the steps of adding or mixing the iron-containing additive in solid or dispersed form with the food products.

7. Iron-containing additive according to claim 4, wherein the low-soluble iron salt is obtained by a method for forming salts by homogeneous, heterogeneous or mixed precipitation and in the presence of a biopolymer.

## Patentansprüche

1. Nahrungsmittelprodukt, dessen Eisengehalt erhöht wurde, mit einem Eisengehalt von mindestens 5 ppm, das eisenhaltige Nanopartikel aufweist,
wobei die Nanopartikel ein schwach lösliches Eisensalz mit einem K_{S} von 10⁻⁷ oder weniger aufweisen,
wobei das Eisensalz aus der Gruppe von Eisenphosphaten ausgewählt ist,
wobei die Nanopartikel eine Partikelgröße von 5 bis 1000 nm haben, und
wobei die Nanopartikel mit Hilfe eines Biopolymers stabilisiert sind, das aus der Gruppe von Polyamiden, organischen Polyoxoestem, die von Bakterien und eukaryotischen Organismen synthetisiert wurden, Poly(äpfelsäure), Polylactiden, Polyglycolid, Polyanhydriden, Polyesteramiden und Cutin, Polythioestem, Polyphosphat, Polyisoprenoiden, Polyphenolen und Nucleinsäuren ausgewählt ist.

2. Nahrungsmittelprodukt nach Anspruch 1,
wobei das Eisensalz aus Pyrophosphat, Eisenorthophosphat oder Gemischen davon ausgewählt ist.

3. Nahrungsmittelprodukt nach einem der vorstehenden Ansprüche in Form eines Fettdispersionsmittels, eines (Protein-) Drinks, eines sofort löslichen Proteindrinks, eines Getränks oder eines Dressings.

4. Eisenhaltiger Zusatzstoff für die Verwendung bei Nahrungsmittelprodukten oder anderen Produkten nach einem der vorstehenden Ansprüche in Form von eisenhaltigen Nanopartikeln mit einer Größe von 5 bis 1000 nm,
wobei die Nanopartikel ein schwach lösliches Eisensalz mit einem K_{S} von 10⁻⁷ oder weniger aufweisen,
wobei das Eisensalz aus der Gruppe von Eisenphosphaten ausgewählt ist, und wobei die Nanopartikel mit Hilfe eines Biopolymers stabilisiert sind, das aus der Gruppe ausgewählt ist, die aus Polyamiden, organischen Polyoxoestern, die von Bakterien und eukaryotischen Organismen synthetisiert wurden, Poly(äpfelsäure), Polylactiden, Polyglycolid, Polyanhydriden, Polyesteramiden und Cutin, Polythioestem, Polyphosphat, Polyisoprenoiden, Polyphenolen und Nucleinsäuren besteht.

5. Eisenhaltiger Zusatzstoff nach Anspruch 4,
wobei das Eisensalz aus Pyrophosphat, Eisenorthophosphat oder Gemischen davon ausgewählt ist.

6. Verfahren zum Herstellen des Nahrungsmittelproduktes nach einem der Ansprüche 1 bis 3, dass die Schritte des Zugebens oder Mischens des eisenhaltigen Zusatzstoffes in fester oder dispergierter Form mit den Nahrungsmittelprodukten aufweist.

7. Eisenhaltiger Zusatzstoff nach Anspruch 4,
wobei das schwach lösliche Eisensalz nach einem Verfahren zum Herstellen von Salzen durch homogene, heterogene oder gemischte Fällung und in Gegenwart eines Biopolymers erhalten wird.

## Revendications

1. Aliment qui a été renforcé en fer, ayant une teneur en fer d'au moins 5 ppm, comprenant des nanoparticules contenant du fer,
dans lequel les nanoparticules comprennent un sel de fer à faible solubilité ayant un Ks de 10⁻⁷ ou moins,
dans lequel le sel de fer est choisi dans le groupe constitué des phosphates de fer,
dans lequel les nanoparticules ont une taille de 5 à 1 000 nanomètres, et
dans lequel les nanoparticules sont stabilisées au moyen d'un biopolymère choisi dans le groupe constitué des polyamides, des polyoxoesters organiques synthétisés par les bactéries et les organismes eucaryotes, du poly(acide malique), des polylactides, du polyglycolide, des polyanhydrides, des polyesteramides et de la cutine, des polythioesters, du polyphosphate, des polyisoprénoïdes, des polyphénols et des acides nucléiques.

2. Aliment selon la revendication 1, dans lequel le sel de fer est choisi parmi le pyrophosphate, l'orthophosphate de fer et leurs mélanges.

3. Aliment selon l'une quelconque des revendications précédentes, sous la forme d'une matière grasse à tartiner, d'une boisson (protéinique), d'une boisson protéinique instantanée, d'une boisson ou d'une sauce.

4. Additif contenant du fer destiné à être utilisé dans la nourriture ou d'autres produits selon l'une quelconque des revendications précédentes, sous la forme de nanoparticules contenant du fer ayant une taille de 5 à 1 000 nanomètres,
dans lequel les nanoparticules comprennent un sel de fer à faible solubilité ayant un Ks de 10⁻⁷ ou moins,
dans lequel le sel de fer est choisi dans le groupe constitué des phosphates de fer, et
dans lequel les nanoparticules sont stabilisées au moyen d'un biopolymère choisi dans le groupe constitué des polyamides, des polyoxoesters organiques synthétisés par les bactéries et les organismes eucaryotes, du poly(acide malique), des polylactides, du polyglycolide, des polyanhydrides, des polyesteramides et de la cutine, des polythioesters, du polyphosphate, des polyisoprénoïdes, des polyphénols et des acides nucléiques.

5. Additif contenant du fer selon la revendication 4, dans lequel le sel de fer est choisi parmi le pyrophosphate, l'orthophosphate de fer et leurs mélanges.

6. Procédé de préparation de l'aliment selon l'une quelconque des revendications 1 à 3, comprenant les étapes consistant à ajouter ou à mélanger l'additif contenant du fer sous une forme solide ou dispersée avec les aliments.

7. Additif contenant du fer selon la revendication 4, dans lequel le sel de fer à faible solubilité est obtenu par un procédé de préparation de sels par précipitation homogène, hétérogène ou mixte et en présence d'un biopolymère.
